# DEMANDE DE BREVET EUROPEEN

(11) **EP 4 729 315 A1**
(43) Date de publication de la demande: **22.04.2026**
(21) Numéro de dépôt: 24207172.8
(22) Date de dépôt: 17.10.2024
(51) Int. Cl.: B60F 3/00

(54) **CHÂSSIS TÉLESCOPIQUE POUR RÉSIDENCES MOBILES EN ZONES INONDABLES**

(71) Demandeur: SAS Piterac, 14140 Livarot Pays d'Auge (FR)
(72) Inventeur: CARETTI, Pierre, 14140 Livarot (FR)
(74) Mandataire: Weihs, Bruno Konrad

(57) **Abrégé**

Le châssis télescopique pour résidences mobiles en zones inondables combine plusieurs fonctions pour assurer la mobilité et la sécurité des modules d'habitation lors de submersion des terres. La conception du châssis dont la structure constitue l'ossature principale du module, permet à la fois son transport, son montage rapide, son élévation lors d'une submersion ou son déplacement d'urgence. Il est composé d'un support (1) remorquable, équipé de guides verticaux (12) pour la mise en station, d'un noyau central (21a, 21b, 22) emboité avec le support (1) sur lequel vient se déployer l'ossature du module. Lors de l'inondation, le module s'élève verticalement autour de ses guides (12) grâce aux flotteurs gonflables (38) situés sous le plancher autour du support.

## Description

### Domaine technique

La présente invention s'applique à certaines habitations situées en zones inondables. Il existe 4 types de construction pour faire face aux inondations :
- Construction traditionnelle fixe au-dessus de l'eau
- Construction traditionnelle flottante dans une double coque
- Construction légère flottante avec fondations
- Construction légère flottante sans fondations

En France, la loi Climat et Résilience interdit les constructions fixes dans les zones exposées aux inondations, mais les résidences mobiles sont acceptées. Ce qui limite le champ des habitations autorisées dans les zones inondables selon liste ci-dessus aux seules constructions légères sans fondations.

Nous limiterons donc notre recherche à ce que propose la technique actuelle pour satisfaire les 2 critères ci-dessous :
- Assurer la mobilité du lieu de résidence
- Sécuriser l'habitat en zone inondable

### Etat de la technique :

Contexte environnemental, sociétal et réglementaire : Le réchauffement climatique est à l'origine d'une élévation globale du niveau des mers. L'urbanisation intensive, source d'imperméabilisation des sols, amplifie ces effets avec la brusque montée des cours d'eau lors d'épisodes pluvieux. De ce fait, nombre d'habitation sont situées dans des zones submersibles ou condamnées à l'être ces prochaines années. Les pays européens concernés durcissent leur législation pour protéger les biens et les personnes, notamment la France, où il est interdit de construire ou d'aménager de nouveaux lieux d'habitation sur des terrains classés inondables. Les propriétaires dont les terrains sont menacés, doivent déménager ou entreprendre des travaux de sécurisation des lieux existants qui ne font que repousser l'échéance car la montée des eaux est inexorable ! Les résidences mobiles sont cependant acceptées en qualité d'habitat temporaire grâce à leur mobilité qui autorise un déplacement rapide. Dans le reste du monde cette situation pousse au déplacement des personnes dont l'habitat traditionnel est menacé ce qui restreint les zones de peuplement et accroit l'immigration climatique des populations.

Arts antérieurs : Voici 7 procédés représentatifs de l'état actuel de la technique :
- La publication US2023001842 « MOBIL HOME CHASSIS WITH REMOVABLE AXLE AND HITCH ASSEMBLY » : Il s'agit d'un châssis de maison mobile avec essieux et attelage. Le procédé indique la conception d'un cadre rectangulaire amovible équipé d'essieux et d'un attelage en V à fixer sous la structure des mobil home, ceci pour les déplacer et pouvoir être retiré lorsque ceux-ci sont en station. Ce procédé limite donc son champ d'application à rendre escamotable le dispositif de mobilité, afin de mutualiser cet équipement pour plusieurs résidences de même type, avec comme finalité des économies financières. C'est exactement l'inverse de ce qu'il faut faire car de ce fait, le mobil home n'est plus mobile en cas de déplacement d'urgence, car rappelons que la législation exige que celui-ci conserve sa mobilité. Que se passerait-il en cas d'inondation avec plusieurs résidences à déplacer dans un délai court. De plus, les conditions de montage ou démontage en sous-oeuvre des essieux et de l'attelage sous le mobile home en station sur ses cales ne sont pas ou mal mentionnées. Quoi qu'il en soit, avec ou sans procédé US2023001842, les mobil home, ne sont pas préservés des inondations, car ils ne pourront pas être déplacés dans un délai court justifié par l'imminence d'un risque de submersion.
- La publication CN214784787 « CAMPING HOUSE ELEVATING SEAT » : Il s'agit d'une plateforme élévatrice pour des maisons de campings. Ce procédé propose un siège à disposer sous l'habitation pour l'élever grâce un dispositif de type compas. Sa fonction principale semble être de pouvoir surélever la maison du sol pour la déplacer ou pour lui éviter de devoir reposer directement sur le sol, ceci dans un but de gain de temps de mise en place lors du montage-démontage et dans un but financier en économisant les fondations pour des constructions temporaires. Pourrait ainsi en découler la fonction de s'élever en cas d'inondation. Cependant, on ne sait pas si ce procédé peut s'adapter à toutes les résidences d'un camping de la caravane au mobil home en passant par le lodge. On ne connait pas non plus les performances du procédé telles que le poids et la hauteur utile à lever, ni si la disposition des poutres rainurées permettant l'élévation est compatible avec la structure des habitations qu'il entend élever. Le procédé CN 214784787, ne semble pas suffisamment mobile pour le remorquage sur route au sens de la réglementation européenne et la fonction élévation lors d'une inondation reste à démontrer. Ce procédé créé pour servir de support à une habitation temporaire ne répond pas au critère de sécurité en cas d'inondation.
- La publication CN216269806 « WATER VILLA FLOATING BODY STRUCTURE » : Il s'agit d'une structure de corps flottants pour une villa aquatique. Ce procédé consiste à disposer dans un cadre, des blocs rigides flottants sous une plaque en acier sur laquelle est édifiée l'habitation. Ce procédé s'adapte à des constructions légères flottantes mais n'offre aucune mobilité car l'habitation posée dessus n'est déplaçable par camion que par grutage en 1 seul bloc ou après démontage des éléments. De plus la présence des seuls corps flottants rigides génère un volume important supérieur en mètre cube à la tonne transportée. Si le procédé CN216269806 répond au critère de sécurité, il ne permet pas la mobilité imposée pour les installations en zones inondables.
- La publication CN112302183A « FOLDING HOUSE SUITABLE FOR RAPID BUILDING IN WATER AREA » : Il s'agit d'une maison pliante préfabriquée adaptée à une construction rapide dans une zone d'eau. Le procédé décrit un corps sous-marin en forme de parapluie flottant grâce à des vessies gonflables supportant une habitation. Cependant le procédé ne décrit pas ou pas clairement les étapes de montage, de mise en station et d'immersion de la maison, ce qui fait que l'on ne voit que l'aspect théorique du procédé mais pas sa fonctionnalité. Le procédé CN112302183A ne semble pas mobile par lui-même et rien n'est dit sur ces performances, ni sur les conditions de transport, de montage ou démontage. Ce procédé ne répond pas au critère de mobilité et celui de la sécurité reste à démontrer.
- La publication WO2022265517 « FLOATING STRUCTURE FOR INSTALLATION IN WATER, A CLOSED RINGSTRUCTURE AND A TUBULAR ELEMENT FOR BUILDING A FLOATING, STRUCTURE, AND A METHOD FOR BUILDING A VERTICAL STRUCTURE » : Il s'agit d'une structure tubulaire superposée destinée à être installée dans l'eau pour accueillir une construction flottante. La fonctionnalité de ce procédé ne semble pas bien définie en l'absence de croquis explicatifs, sauf celui figurant avec l'abrégé. On ne sait pas si la structure est immergée dans l'eau, telle une cage à poisson flottante, ou si elle sert de support immergé dont les parois sont remplies de béton pour fonder une construction située au-dessus. Le procédé WO2022265517 présente donc trop d'incertitude pour en tirer parti ; la mobilité n'étant pas assurée et la sécurité non démontrée.
- La publication CN115158147 « FOLDING PLATE TYPE EXTENSION METHOD FOR MOTOR HOM » : Il s'agit d'une caravane munie de 2 parties extensibles qui se déploie latéralement sur le lieu de stationnement. Le procédé semble bien documenté sur le pliage des plaques lors du montage. S'agissant d'une caravane pouvant être tractée la mobilité semble assurée. Cependant, le procédé CN115158147 est vulnérable à la submersion, comme la plupart des résidences mobiles actuelles, lorsque intervient dans un camping une inondation soudaine comme cela devient plus souvent le cas avec le réchauffement climatique. En conséquence, le procédé CN115158147 ne répond au critère de sécurité.
- La publication n° WO2018178897 « PLATEFORME INSUBMERSIBLE POUR TERRES EXPOSEES AUX ALEAS CLIMATIQUES » Il s'agit d'une habitation flottante ancrée dans un massif béton qui s'élève sur des tubes fixés dans la fondation grâce à un dispositif à crémaillère ou des bouées gonflables lorsque l'eau monte. Cette construction ancrée au sol n'a aucune mobilité et ne sera pas autorisée en zone inondable.

On peut également citer 6 autres publications plus anciennes relatives à des constructions flottantes telles que :
- « Construction flottante » n° WO2007030013 - 2007.03.15
- « La maison flottante enclavée » n° WO9513212 - 1995.05.18
- « L'agencement d'une construction mobile entre 2 positions, l'une en appui au sol et l'autre flottante » n° WO03031732 - 2003.04.17
- « Construction en bois dans les zones inondables avec système de protection contre les inondations » n° CZ2012330 - 2012.05.20
- « Dispositif de survie dans le cadre de catastrophes naturelles constitué d'un module d'habitation et de ses accessoires » n° WO2007110489 - 2006.03.03
- « Maison flottante à terre » n° WO9513212 - 1995.05.18

Cependant, toutes ces publications font référence à des constructions flottantes qui ne pourront être érigées en zones inondables car non mobiles. On peut donc le constater, les techniques actuelles, bien qu'intéressantes par certains aspects, ne permettent pas de satisfaire à la fois aux 2 critères de mobilité et de sécurité. Voilà pourquoi nous présentons le châssis télescopique destiné aux résidences mobiles situées en zones inondables.

### Historique de l'invention

Le « châssis télescopique pour résidences mobiles en zones inondables » proposé ici est une évolution du projet « Plateforme insubmersible pour terres exposées aux risques et aléas climatiques » qui a fait l'objet d'une demande de brevet publiée sous la référence WO2018178897. Cette demande de brevet concernait une habitation légère flottante fixée sur une fondation ancrée dans le sol, alors que la demande actuelle porte sur un châssis télescopique qui assure le transport, la mobilité, le montage et la flottabilité du module.

### Résumé de l'invention

L'invention propose un châssis télescopique d'ossature pour un module de résidence mobile pour zone inondable, ayant une forme polygonale. Le châssis est configuré pour un transport et une élévation du module de résidence mobile lors d'une submersion. Le châssis télescopique comprend une structure en 2 parties principales comprenant un support du châssis comme première partie principale et un corps du châssis comme deuxième partie principale. Le support du châssis comprend un ensemble roulant formé d'un cadre polygonal, prolongé par un timon, monté sur 2 essieux avec roues, cadre sur lequel repose une base élévatrice formée d'un socle polygonal équipé à chaque angle du socle polygonal de guides verticaux, munis de béquilles télescopiques réglables en pied pour un calage au sol. Le corps du châssis comprend un noyau central, servant de stockage pour des éléments d'enveloppe du module de résidence mobile lors du transport, composé d'une structure monobloc avec une première et une deuxième embases polygonales superposées reliées entre-elles par des tubes verticaux creux coulissant autour des guides verticaux, formant le noyau central autour duquel se déploient à chaque angle des fermes triangulées reliées en tête d'un mât central enfiché en pied au centre de la première embase, permettant la suspension d'un plancher par des poteaux tirants à des poutres du plancher; un dispositif d'élévation comprenant une pluralité de flotteurs, fixés sous le plancher autour du support de châssis configurés pour que lors d'une inondation ils se gonflent automatiquement ou manuellement, permettant ainsi une élévation du corps du châssis sur le support du châssis, donc une flottaison du module de résidence mobile.

Dans un mode de réalisation préféré, la forme polygonale est régulière et est une de celles de la liste qui comprend des formes variant d'un triangle à un dodécagone, un hexagone et un cercle.

Dans un mode de réalisation préféré, le support du châssis comprend de l'acier, et le corps du châssis est emboité sur la base élévatrice pour former un moyen de mise en station.

Dans un mode de réalisation préféré, le cadre polygonal est de forme triangulaire ; et le timon d'attelage extensible comprend un point de fixation qui sert d'attache à la barre de raidissement fixée au noyau central par le collier ; l'ensemble roulant étant configuré pour permettre, en situation d'un remorquage sur route, de déplacer le châssis télescopique, avec les éléments d'enveloppe du module stockés à l'intérieur du noyau central.

Dans un mode de réalisation préféré, la base élévatrice formée par le socle polygonal comprend des entretoises rayonnantes configurées pour raidir la base élévatrice, des tubes guides verticaux fixés à chaque angle du socle polygonal, à l'intérieur desquels coulissent en partie inférieure les béquilles télescopiques réglables, composées chacune d'un tube avec un patin en pied pour un ancrage au sol ; les béquilles télescopiques ayant un diamètre inférieur à un diamètre des tubes guides verticaux, et étant configurées pour être réglables en hauteur pour une mise à niveau du socle polygonal respectivement grâce à au moins un dispositif de la liste qui suit comprenant un ensemble broche et manchon vissé situé dans le prolongement du tube guide vertical, un vérin hydraulique ou un vérin pneumatique fixé à chaque angle sous le socle polygonal dans un prolongement du tube guide vertical et actionné depuis l'intérieur du noyau central.

Dans un mode de réalisation préféré, le socle polygonal est configuré pour servir d'interface entre l'ensemble roulant et le corps du châssis, le socle polygonal comprenant 2 types de poignées de verrouillage qui permettent l'assemblage des éléments suivants selon plusieurs situations : le remorquage du châssis en couplant l'ensemble roulant à la base élévatrice, le transport par container ou la mise à l'eau du châssis en découplant l'ensemble roulant de la base élévatrice, la libération du corps de châssis sur la base élévatrice lors de l'élévation.

Dans un mode de réalisation préféré, le corps de châssis comprend une structure en alliage léger articulée à chaque angle du noyau central depuis une plateforme sécurisée qui constitue l'ossature du module.

Dans un mode de réalisation préféré, la première et la deuxième embases sont raidies par des entretoises rayonnantes, la première embase étant une embase inférieure et la deuxième embase étant une embase supérieure, l'embase inférieure et l'embase supérieure étant reliées verticalement entre elles par les tubes creux, les tubes creux ayant une hauteur d'étage environ, à l'intérieur desquels coulissent les guides verticaux avec un jeu permettant une libre élévation du noyau central; l'ensemble formant le noyau central du corps du châssis.

Dans un mode de réalisation préféré du châssis télescopique d'ossature, sont édifiés dans un ordre précis les fermes triangulées du toit sur l'embase supérieure, comprenant le mât enfiché dans un fourreau situé au centre de l'embase supérieure, et à chaque angle de l'embase supérieur les bracons fixés en pied de l'embase, et en tête du mât par un collier de fixation, un arbalétrier connecté au mât par un collier soutenu à mi portée par une contrefiche, un entrait articulé à l'embase supérieur attaché en bout de l'arbalétrier.

Dans un mode de réalisation préféré, chaque angle de la forme polygonale délimitant le module de résidence, est ceinturé par des profils de rive en alliage léger ; soit une sablière connectée à l'extrémité de chaque arbalétrier au niveau de l'embase supérieure, soit une longrine connectée à l'extrémité de chaque poutre au niveau de l'embase inférieure.

Dans un mode de réalisation préféré du châssis télescopique d'ossature, la pluralité de flotteurs gonflables sont en tissu armé revêtu de résine, de section circulaire ou elliptique, de portance adaptée au poids du module en charge, et sont disposés sous les poutres du plancher, autour de la base élévatrice; les flotteurs sont reliés à un dispositif de gonflage choisi parmi l'un de la liste comprenant un dispositif électrique à air comprimé et un dispositif alimenté par une cartouche de gaz sous pression, le dispositif de gonflage étant déclenché par un dispositif automatique lors de l'inondation, ou par un dispositif manuel depuis l'intérieur du module en cas d'avarie sur le dispositif de gonflage automatique.

Dans un mode de réalisation préféré, la pluralité de flotteurs se gonflent automatiquement ou manuellement lors d'une élévation du niveau de l'eau, permettant ainsi au corps de châssis de coulisser verticalement sur son support grâce aux tubes verticaux creux engagés autour des guides verticaux, et permet ainsi au module de résidence dont il constitue la structure porteuse de coulisser au-dessus de l'eau, jusqu'à atteindre un sommet des guides, soit une hauteur d'étage, ou de flotter librement au-delà en étant retenu par un câble pour limiter son errance; lors de la décrue, le module redescend sur les guides jusqu'à reposer sur la base élévatrice.

Dans un mode de réalisation préféré, l'ensemble roulant est configuré pour effectuer un déplacement du module déplié sur le châssis télescopique ; et le timon extensible, préalablement prolongé lors du montage du plancher permet le remorquage du châssis après la mise en place de la barre de déplacement et le décalage des béquilles

Dans un mode de réalisation préféré, le châssis télescopique d'ossature est configuré pour une mise à l'eau intentionnelle du module déplié sur le châssis télescopique ; le module est déplacé sur son lieu de lancement, puis le gonflage des flotteurs et le découplage de l'ensemble roulant permet sa flottaison.

### Brève description des dessins

Pour le référencement et l'identification des numéros de pièces du module figurant dans la description, les revendications ou les dessins, se référer à la [Table 1].

L'invention sera mieux comprise au travers de la description détaillée d'exemples de réalisation préférentiels de l'invention en référence aux 10 figures dans lesquelles :

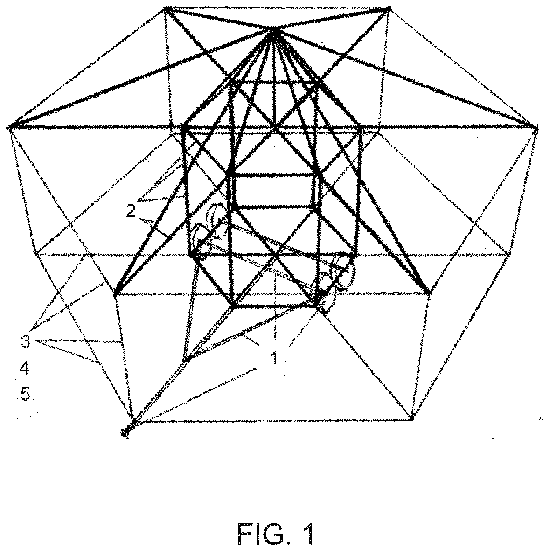

- Fig. 1 : Vue simplifiée du module en station, déplié autour du châssis. Cette figure permet de visualiser la structure du châssis (2) en trait gras, sur laquelle s'articule l'ossature du module (3,4,5) en simple trait, le tout reposant sur le support (1) de châssis en trait double.
- Fig. 2 : Vue générale du module replié sur le châssis lors du remorquage. Cette figure permet d'identifier le volume du colis que constitue les éléments du module (3,4,5) rangés à l'intérieur de la structure du châssis (1,2).
- Fig. 3 : Vue de dessus et de côté du châssis replié lors du transport. Cette figure permet d'identifier les différentes pièces composant le châssis (1,2) en situation de remorquage.
- Fig. 4 : Vue éclatée du châssis replié. Cette figure montre la superposition des 3 parties principales du châssis ; à savoir le support du châssis (1) composé de l'ensemble roulant (1a) et de la base élévatrice (1b) sur laquelle coulisse le corps de châssis (2).
- Fig. 5 : Perspective et détails du châssis replié lors de la mise en station sur son support. Cette figure permet de voir les 3 parties principales (1a, 1b,2) du châssis combiné ensemble et d'identifier les pièces qui permettent d'assurer le calage de la base élévatrice (1b), sur son cadre roulant (1a).
- Fig. 6 : Perspective et détails du châssis lors du montage. Cette figure permet d'identifier les pièces participant au déploiement du module et de voir comment s'effectue depuis la plateforme supérieure, le montage en sécurité de la structure du corps de châssis (2) avec à gauche côté B1 le déploiement des fermes triangulées et à droite côté B2 la suspente des poutres du plancher.
- Fig. 7 : Vue en plan X-X et coupe verticale Y-Y du module sur son châssis pendant l'inondation. Cette figure permet d'identifier les pièces qui participent à l'élévation du module sur son châssis lors d'une montée des eaux et à sa stabilisation sur le sol immergé.
- Fig. 8 : Vue en plan X-X et 2 coupes verticales Y-Y, Z-Z du module sur son châssis lors d'un déplacement d'urgence. Cette figure permet d'identifier les pièces qui participent au déplacement du module déplié sur son châssis sans le démonter.
- Fig. 9 : Vue en plan X-X et 2 coupes verticales partielles Y-Y, Z-Z avec 2 détails A-B du support (1) et corps (2) de châssis. Cette figure permet de voir les 3 parties principales (1a,1b,2) du châssis combinées ensemble et d'identifier les pièces qui assurent le verrouillage ou le déverrouillage de chacune d'entre elles dans différentes situations : le transport, la station en attente de flottaison, la flottaison libre, le déplacement d'urgence.
- Fig. 10 : Perspective générale du module déplié, connecté au châssis en station. Cette figure montre l'intégration de la structure du châssis composant l'ossature du module et permet d'identifier la plupart des pièces composant le module.

**[Table 1]**

| **N°** | **NUMEROTATION ET IDENTIFICATION DES PIECES DE STRUCTURE COMPOSANT LE CHASSIS** |
|---|---|
| | Le numéro des différentes pièces constituant le module permet d'identifier la partie du châssis dont il fait partie par le premier chiffre des dizaine, l'élément par celui des unités et sa particularité par celui de l'indice. Un chiffre unitaire seul désigne tous les chiffres de la dizaine dépendante : ex 1 désigne les pièces de 11 à 19, un nombre seul désigne tous les nombres identiques avec les suffixes dépendants : ex 13 désigne 13a, 13b, 13c |
| 13a | 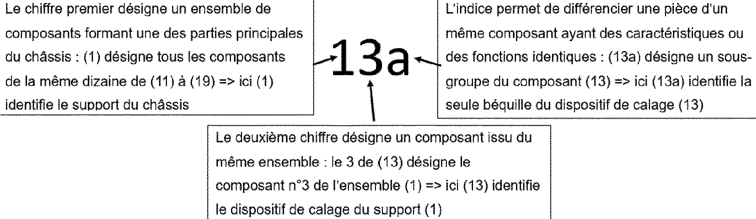 |
| X* | Autres pièces composant l'ossature secondaire et l'enveloppe du module, transportées avec le châssis, indiquées pour la compréhension du montage |

| **1** | **SUPPORT CHASSIS** |
|---|---|
| 11 | Socle polygonal servant de base au support 1 |
| 12 | Tube guide vertical fixé à chaque angle du socle 11 |
| 13a | Béquille de calage du châssis située à chaque angle du socle 11 |
| 13b | Ensemble broche et manchon vissé, fixé à la base des tubes 12 pour réglage en hauteur de la béquille 13a |
| 13c | Piquet ou ancre à bascule à planter au sol en pied de béquille 13a |
| 14 | Cadre triangulaire supportant le timon extensible 15a et le double essieu 17a |
| 15a | Timon télescopique fixé en pointe du cadre 14 et supportant les pièces 15b, 15c |
| 15b | Attache basse de la barre de déplacement fixée sur l'extrémité réglable du timon 15a |
| 15c | Béquille de déplacement montée sur timon 15a |
| 16a | Poignée de (dé)verrouillage du support châssis pour (dé)solidarisation du cadre 14 sur socle 11 |
| 16b | Poignée de (dé)verrouillage du support châssis pour (dé)solidarisation de l'embase 21a sur socle 11 |
| 17a | Double essieu fixé au cadre 14 |
| 17b | Roue équipée à l'extrémité de chaque essieu 17a |
| 18a | Barre télescopique de déplacement à fixer sur attache 15b et 18b |
| 18b | Attache haute barre de déplacement fixée au sommet du tube 22 situé au-dessus du timon 15a |
| 19 | Oreille de préhension fixées sur chaque angle de l'embase 21b pour grutage du châssis et connexions pièces 26 et 28 |

| **2** | **NOYAU CENTRAL & FERMES TRIANGULEES** |
|---|---|
| 21a | Embase polygonale inférieure reposant sur le socle 11 |
| 21b | Embase polygonale supérieure fixée sur les tubes 12 |
| 22 | Tube vertical du noyau coulissant sur les guides 12 et reliant à chaque angle l'embase 21a à l'embase 21b |
| 23 | Plateforme en grilles caillebottis logées entre les montants de l'embase 21b |
| 24a | Potelet garde-corps enfichable aux angles de l'embase 21b |
| 24b | Chainette ou câblette de sécurité attachée sur garde-corps 24a |
| 24c | Échelle télescopique d'accès à la plateforme 23 lors du montage |
| 25a | Mât central enfiché en pied au centre de l'embase 21b |
| 25b | Collier de fixation muni d'oreilles pour assemblage des bracons 26 en haut du mât 25a |
| 25c | Collier de fixation muni d'oreilles pour assemblage des arbalétriers 27 en tête du mât 25a |
| 26 | Bracon de renfort = pièce inclinée, formant un des côtés de la ferme triangulée, fixé sur les oreilles 19 à chaque angle de l'embase 21b et sur le collier 25b en tête du mât 25a |
| 27 | Arbalétrier = pièce rampante disposée aux angles de l'embase 21b, formant un des côtés de la ferme triangulée, attachée sur le collier 25c en tête du mât 25a, reposant sur la contrefiche 28, et reliant l'extrémité de l'entrait 29 |
| 28 | Contrefiche = pièce de renfort fixée sur l'oreille 19 aux angles de l'embase 21b supportant à mi-longueur l'arbalétrier 27 |
| 29 | Entrait = pièce horizontale, formant un des côtés de la ferme triangulée, fixée à chaque angle sur le bord extérieur de l'embase 21b, et reliant l'extrémité de l'arbalétrier 27 ; cette pièce, articulée au point d'attache sur l'embase 21b est rabattue verticalement sur le tube 22 pour le transport puis déployée horizontalement lors du montage |

| **3** | **PLANCHER MODULE** |
|---|---|
| 31 | Poteau d'angle, disposé aux angles du toit, à suspendre en tête à la connexion des pièces 27,29 de la ferme triangulée |
| 32 | Poutre principale rayonnante du plancher, fixée à chaque angle sur le bord extérieur de l'embase 21a, et suspendue à l'extrémité au pied du poteau 31 ; cette pièce, articulée au point d'attache sur l'embase 21a est rabattue verticalement sur le tube 22 pour le transport puis déployée horizontalement lors du montage |
| 33 | Profil de rive autour du plancher, fixé à chaque extrémité aux poutres 32, fermant ainsi le polygone extérieur du plancher |
| 34* | Poutre secondaire rayonnante du plancher, fixée au centre sur l'embase 21a et à l'extrémité sur le profil de rive 33 |
| 35* | Poutre secondaire intermédiaire du plancher, fixée entre les 2 poutres 32 et 34 à équidistance entre le centre et l'extrémité |
| 36* | Peau de coffrage extérieure du plancher en panneaux alvéolaires fixés sur les poutres 32,34,35 |
| 37* | Isolant thermique du plancher en panneaux rigides de mousse polyuréthane reposant sur la peau de coffrage 36 |
| 38 | Flotteur gonflable (1 ou plusieurs) situé sous le plancher en anneau autour du châssis 1&2 et fixé sous les poutres 32 |
| 39 | Câblette d'amarrage du module fixée à l'embase 21a et au socle 11, lovée sous le châssis et d'une longueur appropriée pour éviter l'errance du module lors d'une inondation avec hauteur d'eau supérieure à une hauteur d'étage |

| **4** | **FACADES** |
|---|---|
| 41 | Poteau intermédiaire, disposé entre panneaux de façades, fixé en pied dans le profil de rive 33 et en tête par la sablière 42 |
| 42 | Sablière = poutre horizontale reliant l'extrémité de chaque ferme triangulée au point de connexion arbalétrier 27 et entrait 29, fermant ainsi le polygone extérieur du toit |
| 43a * | Panneau sandwich de façade toute hauteur en partie courante, avec âme isolante thermique, tôlée 2 faces, de largeur identique, ils sont maintenus dans les ailes des poteaux d'angle ou intermédiaire, il repose dans le profil de rive 33 |
| 43b * | Panneau sandwich de façade disposé en allège des fenêtres, identique à 43a, mais de hauteur 1m |
| 44* | Bloc porte avec huisserie de dimension et pose identique à 43a, avec ouvrants en allège pleine et partie supérieure vitrée |
| 45* | Bloc fenêtre avec huisserie de largeur identique à 43b, reposant sur 43b, avec ouvrants coulissants vitrés |

| **5** | **TOITURE** |
|---|---|
| 53* | Panne transversale horizontale fixée sur les arbalétriers 27 à hauteur des contrefiches 28 |
| 54* | Demi-panne secondaire inclinée fixée sur la panne 53 et sur la sablière 42 |
| 55* | Bâche du toit profilée selon la pente, déployée en tournant, attachée en tête sur le mât et en rive sur la sablière 42, fixée par des lanières soudées en sous face sur les arbalétriers 27 et les pannes 52,54 |

| **6** | **EQUIPEMENTS TECHNIQUES** |
|---|---|
| 69a | Dispositif de gonflage du flotteur avec cartouche de gaz ou compresseur électrique à air comprimé |
| 69b | Dispositif de déclenchement automatique du flotteur |
| 69c | Kit de gonflage manuel du flotteur en cas d'avarie du réseau |

Le tableau ci-dessus est le premier tableau de la demande, on s'y référera par la suite en tant que [Table 1].

### Description détaillée de l'invention

L'invention, objet de la présente demande de brevet, porte sur les aspects nouveaux du châssis, qui permet la combinaison de 3 fonctions principales qui n'apparaissaient pas dans la demande de brevet n° WO2018178897 :
- Structure habitable à montage rapide en 1 jour
- Résidence mobile remorquable repliée ou dépliée
- Module muni d'un dispositif d'élévation sans fondations

Pour le référencement et l'identification des numéros de pièces du module figurant dans la description, les revendications ou les dessins, se référer à la [Table 1]. Le plan géométrique du châssis est de préférence identique à celui du module dont il sert de base. Il varie dans une base polygonale, du triangle au dodécagone, jusqu'à la base circulaire. Dans un exemple de réalisation préférentiel, le châssis et son module sont caractérisés par une géométrie de forme hexagonale comme représentés sur toutes les figures de 1 à 10. La forme hexagonale permet d'assembler par juxtaposition plusieurs modules connectés ensemble en nid d'abeilles.

Dans ce même exemple de réalisation, la géométrie hexagonale représentée sur toutes les figures de. 1 à 10, bien que non limitative, est celle qui semble la plus pertinente pour satisfaire à la fois les contraintes statiques et dynamiques de structure, ainsi que les exigences géométriques induites par le concept de transport, de montage rapide et d'élévation du module.

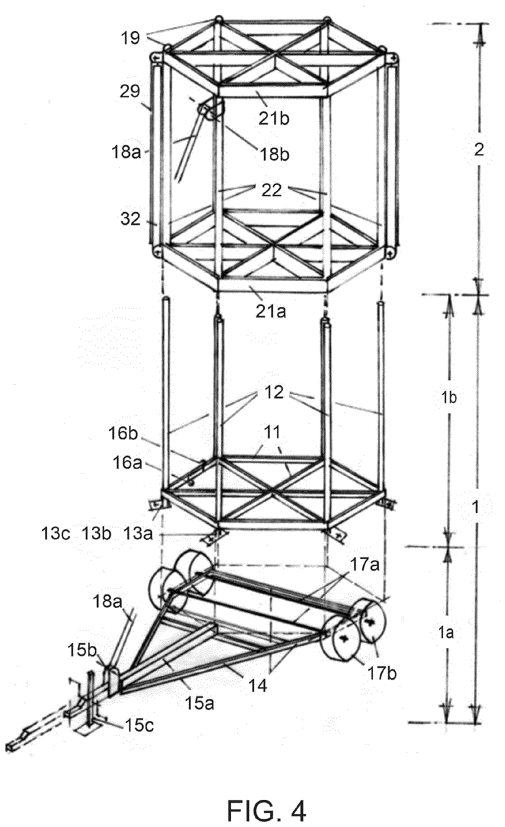

Le châssis télescopique est composé de 3 parties principales superposées (1a,1b,2) et combinées entre elles selon Fig. 4 :
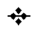 Le support du châssis (1) en métal : c'est la partie inférieure du châssis qui comprend l'ensemble roulant (1a) et la base élévatrice (1b). II a 2 fonctions :
   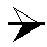 (1a) permet le remorquage du châssis, et assure sa mobilité
   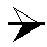 (1b) sert d'interface entre l'ensemble roulant (1a) qui reste au sol et le corps du châssis (2) qui s'élève lors d'une inondation.
❖ Le corps du châssis (2) en alliage léger : c'est la partie supérieure du châssis située au-dessus du socle (11). Il est composé d'un noyau central, c'est une structure monobloc constituée des pièces (21a,21b,22), sur laquelle vient se connecter les fermes triangulées (25,26,27,28,29) supportant l'ossature du plancher (31,32) du module. Le noyau central (21a,21b,22) a 3 fonctions :
   > Sert de râtelier de stockage des composants du module (3,4,5) lors du transport
   > Permet le déploiement rapide du module grâce aux éléments d'ossature (25,26,27,28,29,31,32) qui s'articulent autour de lui
   > Autorise l'élévation du module par flottaison lors d'une inondation grâce aux tubes (22) coulissants autour des tubes guides (12)

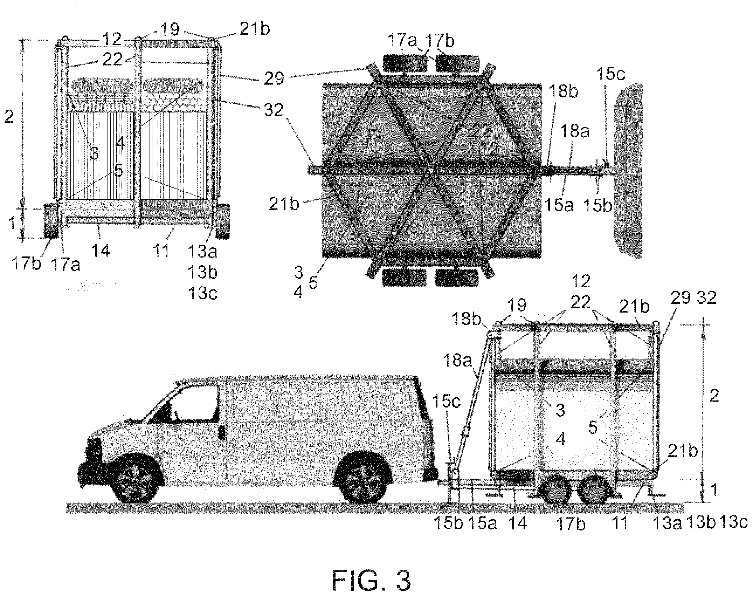

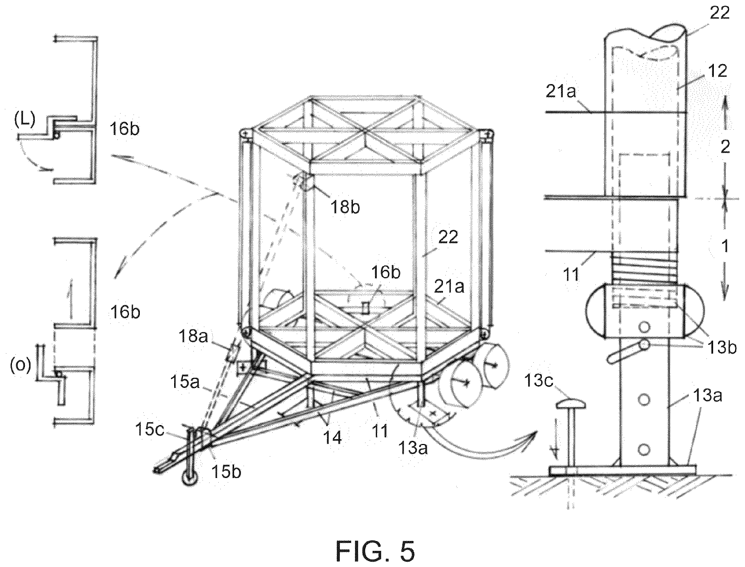

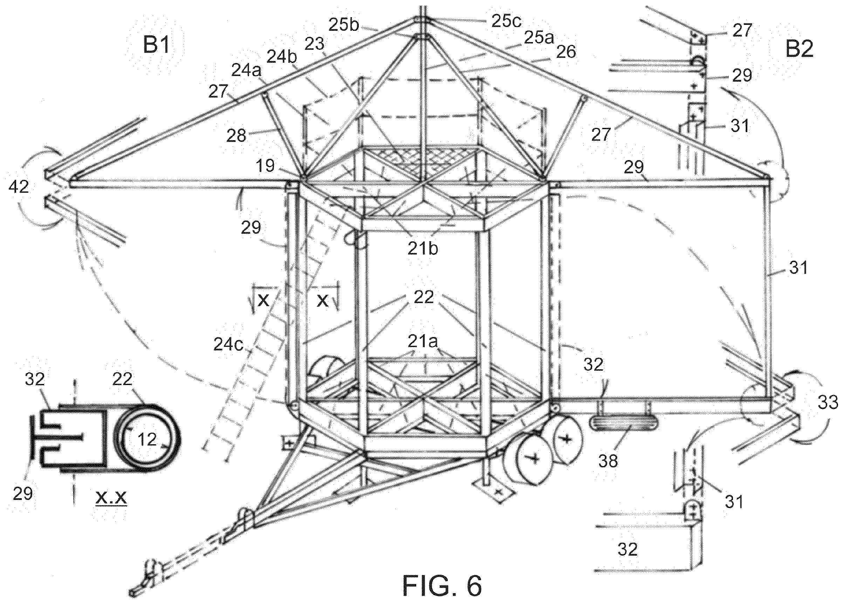

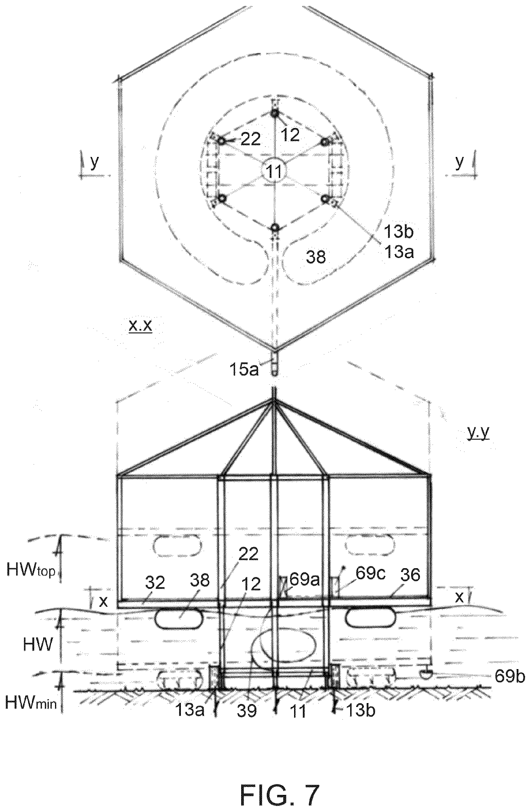

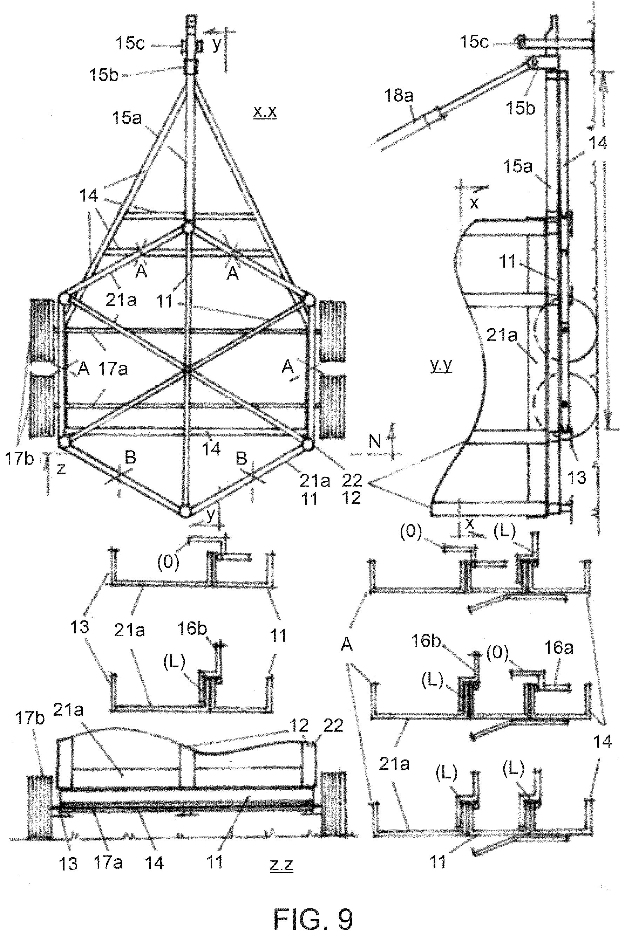

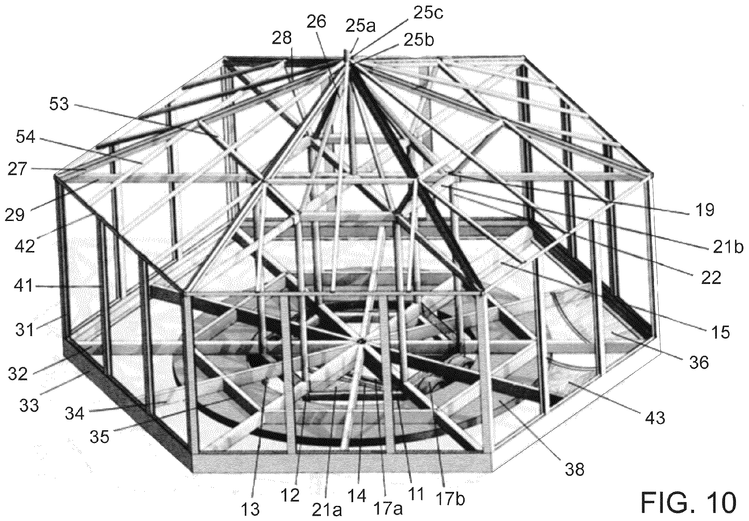

Dans l'exemple de réalisation proposé, la forme polygonale retenue est hexagonale selon la Fig. 4, on peut distinguer :
❖ L'ensemble roulant (1a), représenté en Fig. 3, Fig. 4, Fig. 5, Fig. 9, est l'assemblage d'un cadre (14), représenté dans une forme préférentielle triangulaire, supporté par un double essieu (17a) muni de roues (17b) et prolongé par un timon télescopique (15a). L'ensemble roulant (1a) assure le remorquage du module replié ou déplié ; il peut être dissocié de la base élévatrice (1b) en actionnant les poignées de (dé)verrouillage (16a) selon la Fig. 9 lors d'un transport par container ou par camion, mais aussi lors d'une mise à l'eau du module. Les poignées de (dé)verrouillage (16) sont représentées Fig. 5, Fig. 9 dans une forme simplifiée pour leur fonctionnalité. Dans une autre configuration, le cadre (14) sur lequel est fixé l'ensemble roulant (1a) peut avoir une forme polygonale qui épouse la forme du socle (11). L'ensemble roulant (1a) permet ainsi le roulage par remorquage du châssis selon Fig. 3.
❖ La base élévatrice (1b), représenté en Fig. 4, Fig. 5, Fig. 6, Fig. 7, Fig. 9 est un ensemble monobloc composé d'un socle polygonal (11) surmonté par des tubes guides verticaux (12). En partie basse, les tubes (12) sont prolongés par des béquilles télescopiques réglables (13a,13b) pour le calage du châssis lors de la mise en station du module. La forme préférentielle triangulaire du cadre (14) permet de recevoir le socle polygonal (11), de fixer celui-ci sur les montants du cadre (14) grâce aux poignées de verrouillage (16a) tout en permettant l'abaissement des béquilles de calage (13a) situées à chaque angle du socle polygonal (11). Si la forme du cadre (14) épouse celle du support (11), le traitement des angles du cadre (14) devra permettre l'abaissement des béquilles de calage (13a) : voir Fig. 4. Dans une autre configuration plus évoluée, il est possible de remplacer l'ensemble béquille, manchon vissé et broche situé à chaque angle du socle (11) par des vérins hydrauliques ou pneumatiques fixés sous le socle polygonal (11) dans le prolongement du tube (12) et actionnés électriquement depuis le module. En partie haute, les tubes (12) servent de guide pour l'élévation du module. La base élévatrice (1b) permet la mise en station selon la Fig. 5 et l'élévation du module selon Fig. 7.
❖ Le corps du châssis (2), représenté en Fig. 4, Fig. 6, Fig. 10, constitue la structure principale du châssis avec :
   ➢ Le noyau central, représenté en Fig. 6, est composé d'une embase polygonale inférieure (21a) et d'une embase polygonale supérieure (21b) reliées par des tubes creux verticaux (22) coulissants dans les guides (12) fixés sur le socle (11). Les tubes (22), d'une hauteur d'étage, de nombre identique et d'un diamètre légèrement supérieur aux guides (12) solidaires du socle (11), autorisent la libre élévation du module lors d'une inondation et sa redescente lors de la décrue selon la Fig. 7. Afin de permettre le montage ou le démontage rapide du module, le noyau central (21a,22,21b) est pourvu selon la Fig. 6 de points d'attache des éléments d'ossature du module qui s'articuleront autour de lui.
   ➢ Les fermes triangulées (26,27,28,29), représentées partiellement en Fig. 6, sont assemblées autour du mât (25) fixé au centre de l'embase polygonale supérieure (21b), ceci à partir de la plateforme constituée par les pièces (23,24). Les pièces (26,27,29) renforcées par la pièce (28) constituent ainsi à chaque angle du socle (21b) un triangle inversé permettant de suspendre les façades (4) et le plancher (3) du module. Pour favoriser le montage, l'entrait (29) articulé en tête du tube (22) peut être rabattu verticalement le long du tube (22) lors du transport et déployé horizontalement lors du montage sur l'extrémité de l'arbalétrier (27). De la même façon, la poutre principale du plancher (32) articulée en pied au bas du tube (22) peut être rabattue verticalement le long du tube (22) lors du transport et déployée horizontalement lors du montage en pied du poteau (31). Pour respecter les gabarits du colis transporté ces 2 pièces pourront s'emboiter verticalement dans l'ordre suivant comme indiqué en Fig. 6, l'entrait (29) à l'extérieur, la poutre (32) contre le tube (22).
   ➢ Le corps de châssis (2) est interconnecté à l'ossature du module selon la Fig. 10

### Différentes fonctions du châssis

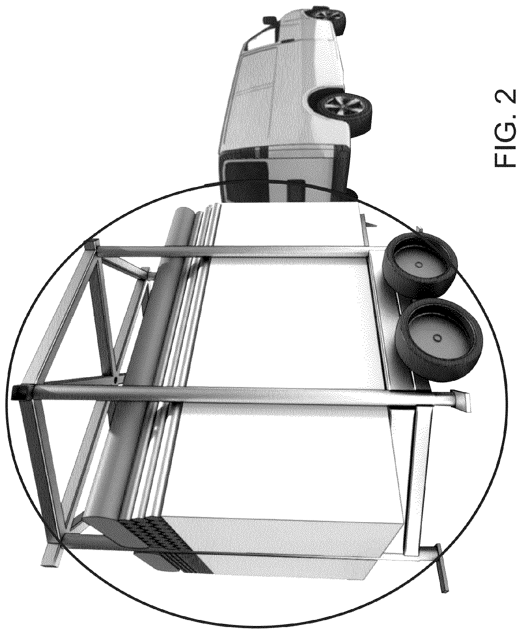

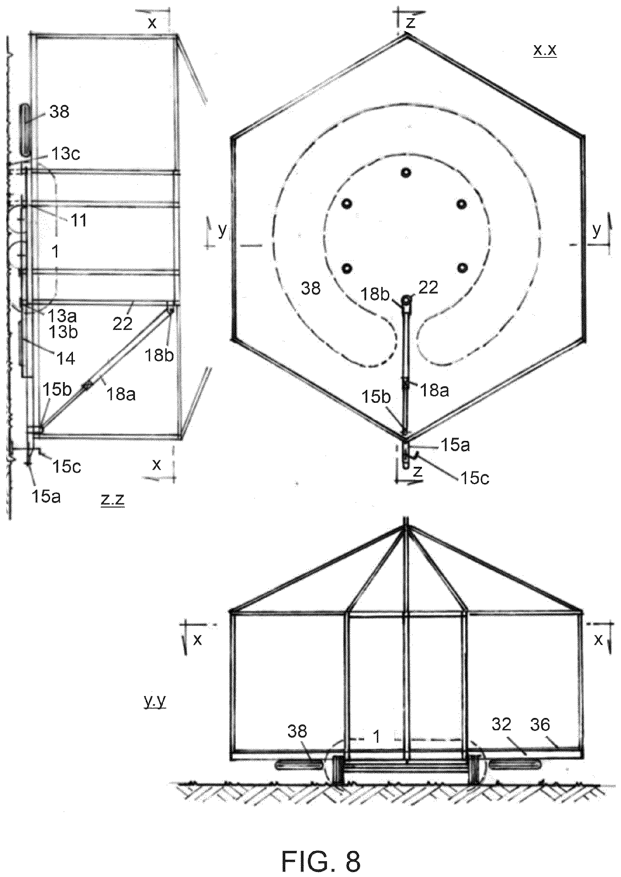

Pour le référencement et l'identification des numéros de pièces du module figurant dans la description, les revendications ou les dessins, se référer à la [Table 1]. Le « châssis télescopique pour résidences mobiles en zones inondables » permet d'assurer 5 fonctions : 1 le transport, 2 le montage-démontage, 3 l'élévation, 4 le déplacement d'urgence, 5 la mise à l'eau :
1) Le transport : Le module replié dans le châssis peut être tracté ou manutentionné sous forme d'un colis compact selon les Fig. 2, Fig. 3. L'ensemble roulant (1a) selon les Fig. 4, Fig. 9, est composé d'un cadre triangulaire (14) sur lequel sont assemblés 2 essieux (17a) munis de roues (17b) pour équilibrer la charge ainsi qu'un timon rétractable (15a) pour être remorqué. Le socle (11), muni des guides (12), est solidaire du cadre (14) grâce aux poignées de verrouillage (16a) représentées en Fig. 9. Le socle (11) sert d'interface au noyau (21,22), composant la partie centrale du corps du châssis (2), qui constitue le râtelier de stockage des composants du module. Une barre télescopique réglable (18a), fixée par collier (18b) en tête du tube (22) au-dessus du timon (15a) et par une attache (15b) permet de stabiliser la charge lors du roulage. La barre (18a) ne sert que pour les opérations de remorquage du module, qu'il soit replié ou déplié, elle est donc déposée dans les autres cas. On peut distinguer les applications suivantes :
   a) Le transport par remorque selon les Fig. 2, Fig. 3 : en mode remorquage, le châssis repose sur son support (1) surmonté du noyau central (21a,21b,22) qui constitue un râtelier de stockage à l'intérieur duquel sont rangés les autres éléments de structure et d'enveloppe du module (3,4,5). Le volume du colis est approximativement de 20m3 pour un poids de 2tonnes environ. L'ensemble, de largeur inférieure à 2.55m, peut être donc tracté sur route par un véhicule léger conduit avec un permis B pour un PTRA (Poids Total Roulant Autorisé) de 3.5tonnes maximum.
   b) Le transport en container selon les Fig. 3, Fig. 4, Fig. 9 : l'ensemble roulant (1a) qui permet le remorquage du châssis peut être séparé facilement du socle (11) pour permettre le transport du module dans un container de 40 pieds « Hight Cube » autorisant un passage de 2.28*2.56mht au droit des portes : il suffit pour cela de déverrouiller les poignées d'assemblage (16a) fixées au socle (11) selon la Fig. 9, ce qui autorise ainsi un colis de dimensions adaptées, formé par le socle et ses guides (11,12) emboités dans le noyau central (21a,21b,22), qui contient l'ensemble des pièces d'ossature et d'enveloppe (3,4,5) du module.
   c) La manutention du châssis selon les Fig. 3, Fig. 4, Fig. 9 : l'embase supérieure (21b) du noyau est munie d'oreilles de préhension (19) à chaque angle. Pour les opérations de grutage, il est possible d'élinguer les oreilles (19) pour lever le colis, avec ou sans l'ensemble roulant (1a), ceci en actionnant ou pas les poignées d'assemblage(16b) fixées au socle (11) selon la Fig. 9 qui solidarise l'embase inférieure (21a) avec le socle du châssis (11).
2) Les opérations de montage ou démontage selon les Fig. 5, Fig. 6 et Fig. 10 s'opèrent en 3 étapes :
   a) La stabilisation du châssis selon la Fig. 5 : le lieu d'installation du module devra comporter une aire relativement plane et un sol ferme. Une fois sur site, le calage du châssis s'effectue par l'abaissement des béquilles télescopiques (13a) situées en bas des tubes (12) à chaque angle du socle (11). Chacune est munie de patin de répartition, percé d'un trou afin de pouvoir être traversé par des piquets (13c) enfichés dans le sol. Dans le prolongement du tube (12), un réglage par manchon à vis et broche (13b) traversant chaque béquille (13a) sert à la mise à niveau du support de châssis (1). Dans une configuration plus évoluée, le calage du châssis peut être facilité en remplaçant l'ensemble (13) avec béquilles, manchons vissés et broches par des vérins hydrauliques ou pneumatiques munis de plaques de répartition en pied. Une fois le support calé, la barre de déplacement (18a) utilisée pour le remorquage peut être déposée. L'ensemble roulant (1a) et l'attache déportée (18b) restent en place, mais il est nécessaire de translater le timon (15a) lors d'un déplacement d'urgence selon 4. Pour des emplacements récurrents dans des terrains de campings par exemple, l'utilisation d'un dallage en béton limité à l'empattement du châssis et muni d'inserts de fixation prépositionnés au droit des béquilles est une bonne solution.
   b) Le châssis est en station, le montage de l'ossature principale peut s'effectuer dans l'ordre suivant selon la Fig. 6 :
      i) Le montage des fermes du toit supportant le plancher représenté à gauche de la Fig. 6 selon le repère B1 :
         (1) L'accès et la sécurisation de la plateforme sur l'embase supérieure (21b) qui dispose entre les entretoises d'un platelage caillebotis (23) se fait par des potelets garde-corps enfichables (24a) dans les réservations prévues en partie supérieure des tubes (22) et par 2 chaînettes (24b) en périphérie. L'accès depuis le sol s'effectue par une échelle (24c) crochetée à l'embase supérieure (21b). Les éléments (23,24a-b) sont partiellement représentés en Fig. 6 mais se retrouvent à chaque angle de l'embase (21b).
         (2) Depuis la plateforme sécurisée, on peut effectuer la pose du mât (25a) enfiché dans un fourreau au centre de l'embase supérieure (21b) et la mise en place des bracons (26) fixés en pied sur les oreilles de préhension (19) à chaque angle de l'embase jusqu'en haut du mât, par un collier de fixation (25a). Les éléments (19,26) sont partiellement représentés en Fig. 6 mais se retrouvent à chaque angle de l'embase (21b).
         (3) Depuis la plateforme sécurisée, on peut effectuer la pose des fermes triangulées à chaque angle de l'embase (21b) avec pour chacune d'elles dans cet ordre précis : le positionnement et l'attache de l'arbalétrier (27) sur le collier de fixation en tête du mât (25b), l'arbalétrier (27) étant soutenu à mi portée par la contrefiche (28) fixée en pied sur l'oreille de grutage (19). Le déploiement horizontal de l'entrait (29) peut ensuite s'effectuer depuis le sol, celui-ci étant replié verticalement pour le transport à l'intérieur de la poutre (32), le long du tube (22). L'entrait (29) vient se connecter à l'extrémité de l'arbalétrier (27), l'ensemble formant ainsi un triangle inversé ayant pour base l'arbalétrier (27) et 2 côtés constitués par le bracon (26) et l'entrait (29). Pour solidariser les fermes entre elles, la pose des sablières de rive (42) fixées en extrémité des entraits (29) s'effectue depuis le sol. Les éléments (19,27,28,29) sont partiellement représentés en Fig. 6 mais se retrouvent à chaque angle de l'embase (21b).
      ii) Le montage de la structure principale du plancher représenté à la droite de la Fig. 6 selon le repère B2 :
         (1) Le pré-positionnement au sol du ou des flotteurs gonflables (38) en position repliés au pourtour du châssis. Ceux-ci seront fixés sous les poutres (32) et raccordés au dispositif de gonflage (69) avant la pose des panneaux (36) : voir montage de l'enveloppe selon 2.c).i).
         (2) La pose de la structure du plancher depuis le sol s'effectue par la fixation à chaque extrémité des arbalétriers (27) d'un poteau suspente (31), sur lequel viendra se connecter la poutre (32) rabattue horizontalement ; celle-ci étant repliée verticalement pour le transport le long du tube (22). Ensuite la pose des profils de rive (33) fixés en extrémité des poutres (32) permet de solidariser les poutres (32) entre elles.
         (3) A noter la particularité de mise en place de la poutre (32) située au droit du timon (15a) : en effet, il est nécessaire de faire coulisser le timon au maximum à l'extérieur de telle sorte que celui-ci puisse dépasser suffisamment l'extrémité de la poutre (32) pour pouvoir être attelé lors d'un déplacement d'urgence. Le point de fixation (15b) de la barre de déplacement situé à l'extrémité du timon (15a) coulisse avec lui afin que les oreilles (15b) fixées sur le timon soient accessibles par une trappe ou un insert au travers du plancher depuis l'intérieur du module déplié comme représenté sur la coupe Z.Z en Fig. 8.
         (4) La structure du plancher est suspendue à la structure du toit formant ainsi un ensemble contreventé et indéformable aux contraintes extérieures. Le ou les flotteurs seront fixés en anneau lors de l'étape suivante 2) c) sous les poutres (32) du plancher avant la fermeture de celui-ci par la pose des panneaux (36).
   c) Après le déploiement du châssis, le montage de l'enveloppe du module peut d'effectuer selon la Fig. 10 dans l'ordre suivant :
      i) La pose du plancher comprenant les poutres secondaires (34,35) puis les panneaux (36). La fixation du ou des flotteurs (38) sous les poutres (32) et leur raccordement au dispositif de gonflage (69) intervient avant la pose des panneaux (36) selon les Fig. 7, Fig. 8.
      ii) Le montage de façades comprenant les poteaux intermédiaires (41), les panneaux (43), les portes (44) et fenêtres (45).
      iii) La pose du toit comprenant les poutres secondaires (53,54) supportant la bâche (55).
      iv) Le montage de l'enveloppe ne s'inscrit pas directement dans le déploiement du châssis et des éléments qui le composent. Il est mentionné ici pour la compréhension du montage du module. Celui-ci pourra s'effectuer dans cet ordre, de façon manuelle et sécurisée.
      v) Le démontage s'effectue dans un ordre inverse à celui du montage.
3) Le dispositif d'élévation selon la Fig. 7 :
   a) A ce stade, le module est entièrement monté. Il repose sur son châssis (1,2) en position stationnaire, calé sur ses béquilles (13a) et fixé au sol par des piquets (13c). Il faut vérifier à ce stade que la base élévatrice qui a pu être solidarisée au socle (11) lors du transport soit bien déverrouillée. Il suffit pour cela de rabattre la poignée d'assemblage (16b) en position ouverte (O=open) selon les Fig. 5, Fig. 9 pour libérer le télescopage des tubes (22) autour des guides (12). Le dispositif d'élévation, situé sous le plancher autour du socle (11), est assuré par un ou plusieurs flotteurs gonflables (38), disposés en anneau ouvert sur le timon (15a). De section circulaire ou elliptique, le volume du ou des flotteurs doit permettre l'élévation du module chargé avec une marge de sécurité grâce à la poussée d'Archimède. Son positionnement annulaire au centre médian du plancher permet le bon équilibre des charges par rapport au centre de gravité du module chargé. Lors de l'inondation, un dispositif de déclenchement automatique (69b), relié à une cartouche de gaz sous pression (69a) gonfle le ou les flotteurs (38). La partie élévatrice du module structurée autour du noyau central (21a,21b,22) coulisse verticalement grâce aux tubes (22) autour des guides (12) fixés sur le socle (11) reposant sur le sol. Selon la Fig. 7, lorsque le niveau d'eau (HW min) est atteint, le flotteur se gonfle et le module s'élève en suivant la montée de l'eau jusqu'au niveau (HW top) qui marque la fin des guides (12). Au-delà du niveau (HW top), de l'ordre d'une hauteur d'étage, le module quitte les guides (12) et flotte librement comme un bateau que l'on a attaché préventivement par un câble (39) au socle (11) pour limiter son errance. Un dispositif à air comprimé déclenché électriquement peut de la même manière, remplacer le dispositif au gaz (69a). Dans les 2 cas, lors d'une avarie sur le dispositif à gaz ou de panne d'électricité, un dispositif de gonflage manuel à air (69c) peut être actionné depuis l'intérieur du module par les occupants. Le ou les flotteurs gonflables (38) sont en tissu armé revêtu de PVC et résine polyuréthane ou caoutchouc, matériau léger, souple et résistant, qui permet d'amortir les chocs éventuels des objets charriés par l'eau tout en assurant une bonne glissance de l'eau autour du flotteur même chargée de boue ou de débris. Dans une autre configuration non représentée dans les figures, il est possible de disposer en lieu et place des flotteurs gonflables, des flotteurs rigides, vides ou moussés, de forme parallélépipédique, inscrits dans le cercle médian autour du châssis. Cette option a l'inconvénient, à performance utile égale de péjorer le poids du module et le volume du colis transporté, ainsi que de renchérir l'empreinte carbone de l'ensemble.
4) Le déplacement d'urgence selon la Fig. 8 :
   a) A ce stade, le module est entièrement monté. Il repose sur son châssis (1,2) en position stationnaire calé sur ses béquilles (13a) et fixé au sol par des ancrages (13c). Il est possible de déplacer rapidement le module sans avoir à le replier. Lors du montage, le timon (15a) a été télescopé de sorte que le crochet d'attelage dépasse suffisamment le plancher pour pouvoir être pris en remorque selon le repère B2 Fig. 6. La pose préalable à l'intérieur du module de la barre de déplacement (18a), extensible et réglable, inclinée à 45° environ est nécessaire pour assurer l'équilibre des charges. La barre (18a) située au-dessus du timon (15a) est fixée en pied sur le point d'attache (15b) intégré dans le plancher et en tête sur le tube (22) par l'oreille de fixation (18b). La mise en charge de la béquille du timon (15c) permet de décaler les béquilles de stabilisation du châssis (13a) situées sous les guides (12) du socle (11). Pour ce faire il est nécessaire de s'engager sous le plancher pour désactiver les ancrages (13c) et télescoper les béquilles (13a) en position haute, ceci en ajustant pour chaque béquille l'ensemble manchon vissé sur sa broche (13b), selon la Fig. 5. Dans une configuration plus évoluée, il est possible d'actionner directement les vérins hydrauliques ou pneumatiques de calage depuis l'intérieur du module, comme indiqué en 2.a).Le déplacement du module déplié peut alors s'effectuer, mais à cause de sa largeur supérieure à celle d'un convoi routier celui-ci n'est possible que sur une faible distance et sur un terrain privatif, notamment par exemple dans les situations suivantes :
   b) La mise à l'hivernage ou la relocalisation du module pour la saison touristique estivale.
   c) La mise en sécurité préventive du module dans une zone protégée lors d'épisodes climatiques exceptionnels sortant du cadre de la simple inondation par montée des eaux : avis de tsunamis, cyclones, tempêtes dépassant les critères établis au cahier des charges.
   d) La mise à l'eau intentionnelle du module selon 5).
5) La mise à l'eau du module selon les Fig. 7, Fig. 8, Fig. 9 :
   a) Il est possible d'effectuer la mise à l'eau du module dans le cas où celui-ci serait utilisé en résidence flottante temporaire sur un plan d'eau : un lac, un étang ou une rade de port par exemple. Il faut pour cela effectuer le montage au plus près du lieu d'immersion comme indiqué à l'étape montage du châssis. Le montage terminé, le module peut être déplacé sur une courte distance comme indiqué à l'étape déplacement d'urgence. Une fois celui-ci sur son lieu de lancement avec une pente inférieure à 15% qu'il s'agisse d'une rampe à bateau ou d'un lieu de mise à l'eau à marée basse, il est nécessaire de coupler le socle (11) à l'embase inférieure (21a), puis d'armer le flotteur gonflable (38). Le verrouillage du socle (11) s'effectue en rabattant les poignées d'assemblage (16b) en position (L=lock) sur l'embase inférieure (21a) selon la Fig. 9. Pour armer le flotteur, il suffit de procéder à l'activation du gonflage comme indiqué à l'étape déplacement d'urgence. Ensuite, dès que la partie élévatrice du module (2,3,4,5) solidaire du socle (11) flotte, la barre de déplacement (18a) pourra être retirée si nécessaire, l'ensemble roulant (1a), reste suspendu au module lors de la flottaison, ce qui facilitera sa sortie de l'eau. Le module devient ainsi une résidence flottante sans ancrage. Pour un séjour prolongé dans l'eau ou dans une eau agressive (eau de mer), il est recommandé de se défaire de l'ensemble roulant avant la mise à l'eau car celui-ci alourdi le poids du module. Il suffit pour cela de déverrouiller les poignées d'assemblage (16a) en position (O=open) retenant l'ensemble roulant (1a) au socle (11) avant l'activation des flotteurs (38). Ainsi lorsque le module entrera en flottaison il sera libéré de son ensemble routier (1a) et devient ainsi une résidence flottante sans ancrage, privée de son dispositif de roulage. Celui-ci restera à quai mais pourra être refixé au socle (11) par la manoeuvre inverse, lors de la sortie de l'eau.

### Lexique par ordre alphabétique

▪ Châssis : structure composée du support de châssis (1) et du corps de châssis (2)
▪ Corps du châssis : structure (2) composée du noyau central (21a,21b,22) sur lequel sont articulées les fermes triangulées (25,26,27,28,29) ; il présente au-dessus du noyau central une plateforme sécurisée composée d'un caillebottis (23) muni de garde-corps (24) en rive
▪ Embase : élément polygonal structurant le noyau central qui comprend l'embase inférieure (21a) en bas et l'embase supérieure (21b) en haut
▪ Enveloppe : ensemble des parements extérieurs du module : notamment le plancher (36,37), les façades (43,44,45) et le toit (55) ; ces éléments ont une fonction d'isolation thermique, d'étanchéité à l'air et à l'eau
▪ Façades : ensemble des éléments de structure et d'enveloppe (4) constituant la partie verticale en périphérie du module
▪ Fermes triangulées : pièces de structure (26,27,28,29) assemblées entre elles, fixées sur le mât (25) et aux angles de l'embase supérieure (21b) du noyau central, au bout desquelles sont suspendues les poteaux du plancher (31). Elles constituent l'ossature de la toiture
▪ Flotteur : élément gonflable (38) en une ou plusieurs parties, disposé en anneau sous le plancher permettant la flottaison du module lors de l'inondation par déclenchement du dispositif (69)
▪ Module : ensemble des éléments de structure et d'enveloppe (2,3,4,5) constituant le volume habitable de la résidence mobile
▪ Noyau central : structure polygonale monobloc composée des 2 embases superposées (21a-b) reliées par les tubes verticaux (22) coulissant sur les tubes guides (12) ; le noyau central constitue également la structure de connexion des éléments d'ossature du module, ainsi que le râtelier de stockage des pièces de structure et d'enveloppe du module lors du transport
▪ Ossature du module : ensemble des éléments du module qui supporte l'enveloppe du module, incluant la structure du corps de châssis (2)
▪ Partie fixe du châssis : ensemble monobloc (1b) des composants permettant la mise en station et guidant l'élévation du châssis ; comprend le socle polygonal (11), les tubes guides (12), les béquilles (13). Cet élément sert d'interface entre la partie roulante (1a) et le noyau central (21,22) que l'on peut dissocier l'un ou l'autre du socle (11) en actionnant les poignées de déverrouillage (16)
▪ Partie roulante du châssis : partie assemblée (1a) des éléments permettant le roulage et remorquage du châssis ; comprend le cadre triangulaire (14), le timon et accessoires (15), les essieux et roues (17), la barre de déplacement (18)
▪ Plancher : ensemble des éléments de structure et d'enveloppe (3) constituant le sol du module
▪ Plateforme : surface de travail située sur l'embase (21b) équipée de grille caillebottis (23) et sécurisée par des garde-corps en rive (24)
▪ Socle : composant polygonal (11) du châssis, sur lequel sont fixés les tubes guides (12), il sert d'interface entre la partie roulante (1a) et le noyau central (21,22)
▪ Support châssis : ensemble (1) formé par la partie roulante (1a) et la partie fixe (1b)
▪ Toiture : ensemble des éléments de structure et d'enveloppe (5) constituant la couverte du module

## Revendications

1. Un châssis télescopique d'ossature pour un module de résidence mobile pour zone inondable, ayant une forme polygonale, le châssis est configuré pour un transport et une élévation du module de résidence mobile lors d'une submersion, le châssis télescopique comprenant
une structure en 2 parties principales comprenant un support du châssis (1) comme première partie principale et un corps du châssis (2) comme deuxième partie principale ;
le support du châssis (1) comprenant un ensemble roulant (1a) formé d'un cadre polygonal (14), prolongé par un timon (15), monté sur 2 essieux avec roues (17), cadre (14) sur lequel repose une base élévatrice (1b) formée d'un socle polygonal (11) équipé à chaque angle du socle polygonal (11) de guides verticaux (12), munis de béquilles télescopiques réglables (13) en pied pour un calage au sol ;
le corps du châssis (2) comprenant un noyau central (21a, 21b, 22), servant de stockage pour des éléments d'enveloppe du module de résidence mobile (2,3,4,5) lors du transport, composé d'une structure monobloc avec une première et une deuxième embases polygonales superposées (21a, 21b) reliées entre-elles par des tubes verticaux creux (22) coulissant au tour des guides verticaux (12), formant le noyau central (21a, 21b, 22) autour duquel se déploient à chaque angle des fermes triangulées (26,27,28,29) reliées en tête d'un mât (25) central enfiché en pied au centre de la première embase (21a), permettant la suspension d'un plancher (3) par des poteaux tirants (31) à des poutres (32) du plancher; un dispositif d'élévation comprenant une pluralité de flotteurs (38), fixés sous le plancher (3) autour du support de châssis (1) configurés pour que lors d'une inondation ils se gonflent automatiquement ou manuellement, permettant ainsi une élévation du corps du châssis (2) sur le support du châssis (1), donc une flottaison du module de résidence mobile (2,3,4,5).

2. Le châssis télescopique d'ossature selon la revendication 1, dans lequel la forme polygonale est régulière et est une de celles de la liste qui comprend des formes variant d'un triangle à un dodécagone, un hexagone et un cercle.

3. Le châssis télescopique d'ossature selon la revendication 1, dans lequel le support du châssis (1) comprend de l'acier, et le corps du châssis (2) est emboité sur la base élévatrice (1b) pour former un moyen de mise en station.

4. Le châssis télescopique d'ossature selon la revendication 3, dans lequel le cadre polygonal (14) est de forme triangulaire ; et le timon d'attelage extensible (15a) comprend un point de fixation (15b) qui sert d'attache à la barre de raidissement (18a) fixée au noyau central (21,22) par le collier (18b) ; l'ensemble roulant (1a) étant configuré pour permettre, en situation d'un remorquage sur route, de déplacer le châssis télescopique, avec les éléments d'enveloppe du module stockés à l'intérieur du noyau central (21a,21b,22).

5. Le châssis télescopique d'ossature selon la revendication 3, dans lequel la base élévatrice (1b) formée par le socle polygonal (11) comprend des entretoises rayonnantes configurées pour raidir la base élévatrice (1b), des tubes guides verticaux (12) fixés à chaque angle du socle polygonal, à l'intérieur desquels coulissent en partie inférieure les béquilles télescopiques réglables (13a), composées chacune d'un tube avec un patin en pied pour un ancrage au sol (13c) ; les béquilles télescopiques (13a) ayant un diamètre inférieur à un diamètre des tubes guides verticaux (12), et étant configurées pour être réglables en hauteur pour une mise à niveau du socle polygonal (11) respectivement grâce à au moins un dispositif de la liste qui suit comprenant un ensemble broche et manchon vissé (13b) situé dans le prolongement du tube guide vertical (12), un vérin hydraulique ou un vérin pneumatique fixé à chaque angle sous le socle polygonal (11) dans un prolongement du tube guide vertical (12) et actionné depuis l'intérieur du noyau central (21a,21b,22).

6. Le châssis télescopique d'ossature selon la revendication 5, dans lequel le socle polygonal (11) est configuré pour servir d'interface entre l'ensemble roulant (1a) et le corps du châssis (2), le socle polygonal (11) comprenant 2 types de poignées de verrouillage (16a, 16b) qui permettent l'assemblage des éléments suivants selon plusieurs situations : le remorquage du châssis en couplant l'ensemble roulant (1a) à la base élévatrice (1b), le transport par container ou la mise à l'eau du châssis en découplant l'ensemble roulant (1a) de la base élévatrice (1b), la libération du corps de châssis (2) sur la base élévatrice (1b) lors de l'élévation.

7. Le châssis télescopique d'ossature selon la revendication 1, dans lequel le corps de châssis (2) comprend une structure en alliage léger articulée à chaque angle (25,26,27,28,29) du noyau central (21a,21b,22) depuis une plateforme sécurisée (23,24) qui constitue l'ossature du module (2,3,4,5).

8. Le châssis télescopique d'ossature selon la revendication 7, dans lequel la première et la deuxième embases sont raidies par des entretoises rayonnantes, la première embase étant une embase inférieure (21a) et la deuxième embase étant une embase supérieure (21b), l'embase inférieure et l'embase supérieure étant reliées verticalement entre elles par les tubes creux (22), les tubes creux ayant une hauteur d'étage environ, à l'intérieur desquels coulissent les guides verticaux (12) avec un jeu permettant une libre élévation du noyau central; l'ensemble (21a, 21b, 22) formant le noyau central du corps du châssis.

9. Le châssis télescopique d'ossature selon la revendication 7, dans lequel sont édifiés dans un ordre précis les fermes triangulées du toit sur l'embase supérieure (21b), comprenant le mât (25a) enfiché dans un fourreau situé au centre de l'embase supérieure (21b), et à chaque angle de l'embase supérieur (21b) les bracons (26) fixés en pied de l'embase (21b), et en tête du mât (25a) par un collier de fixation (25b), un arbalétrier (27) connecté au mât (25a) par un collier (25c) soutenu à mi portée par une contrefiche (28), un entrait (29) articulé à l'embase supérieur (21b) attaché en bout de l'arbalétrier (27).

10. Le châssis télescopique d'ossature selon la revendication 7, dans lequel chaque angle de la forme polygonale délimitant le module de résidence, est ceinturé par des profils de rive en alliage léger ; soit une sablière (42) connecté à l'extrémité de chaque arbalétrier (27) au niveau de l'embase supérieure (21b), soit une longrine (33) connecté à l'extrémité de chaque poutre (32) au niveau de l'embase inférieure (21a).

11. Le châssis télescopique d'ossature selon la revendication 1, dont la pluralité de flotteurs gonflables (38) sont en tissu armé revêtu de résine, de section circulaire ou elliptique, de portance adaptée au poids du module en charge, et sont disposés sous les poutres (32) du plancher, autour de la base élévatrice (1b); les flotteurs (38) sont reliés à un dispositif de gonflage choisi parmi l'un de la liste comprenant un dispositif électrique à air comprimé et un dispositif alimenté par une cartouche de gaz sous pression (69a), le dispositif de gonflage étant déclenché par un dispositif automatique (69b) lors de l'inondation, ou par un dispositif manuel (69c) depuis l'intérieur du module en cas d'avarie sur le dispositif de gonflage automatique.

12. Le châssis télescopique d'ossature selon la revendication 11, dans lequel la pluralité de flotteurs (38) se gonflent automatiquement ou manuellement lors d'une élévation du niveau de l'eau, permettant ainsi au corps de châssis (2) de coulisser verticalement sur son support (1) grâce aux tubes verticaux creux (22) engagés autour des guides verticaux (12), et permet ainsi au module de résidence (2,3,4,5) dont il constitue la structure porteuse de coulisser au-dessus de l'eau, jusqu'à atteindre un sommet des guides (12), soit une hauteur d'étage, ou de flotter librement au-delà en étant retenu par un câble (39) pour limiter son errance; lors de la décrue, le module redescend sur les guides (12) jusqu'à reposer sur la base élévatrice (1b).

13. Le châssis télescopique d'ossature selon la revendication 1, dont l'ensemble roulant (1a) est configuré pour effectuer un déplacement du module (2,3,4,5) déplié sur le châssis télescopique ; et le timon extensible (15a), préalablement prolongé lors du montage du plancher (3) permet le remorquage du châssis après la mise en place de la barre de déplacement (18a) et le décalage des béquilles (13a).

14. Le châssis télescopique d'ossature selon la revendication 11 configuré pour une mise à l'eau intentionnelle du module (2,3,4,5) déplié sur le châssis télescopique ; dans ce cas comme indiqué dans la revendication 13, le module est déplacé sur son lieu de lancement, puis le gonflage des flotteurs (38) et le découplage de l'ensemble roulant (1a) selon la revendication 6 permet sa flottaison.
